# EUROPEAN PATENT SPECIFICATION

(11) **EP 1 570 742 B1**
(45) Date of publication and mention of the grant of the patent: **04.05.2011**
(21) Application number: 05380025.6
(22) Date of filing: 15.02.2005
(51) Int. Cl.: A23B 5/005

(54) **Process to preserve vegetables and/or vegetable dishes by high pressure steam treatment, and the product obtained using this process**
Verfahren zur Bewahrung von Gemüse und/oder Gemüsegericht, durch Hochdruck Dampf Behandlung und damit hergestellte Produkte
Procédé de conservation de légumes et /ou plats de légumes par un traitement à la vapeur sous hautre pression, ainsi que le produit obtenu par ce procédé

(30) Priority: 01.03.2004 ES 200400480
(43) Date of publication of application: 07.09.2005
(73) Proprietor: Industrias Alimentarias De Navarra, S.A., 31330 Villafranca, Navarra (ES)
(72) Inventor: Aramendia Zuazu, Joaquin, 31330 Villafranca, Navarra (ES); Arrondo Marton, Jesus, 31330 Villafranca, Navarra (ES); Sanchez Ruiz, Juan Antonio, 31330 Villafranca, Navarra (ES)
(74) Representative: Carpintero Lopez, Francisco

(56) References cited:
- EP-A- 1 020 119
- FR-A- 2 657 753
- FR-A- 2 784 864
- PATENT ABSTRACTS OF JAPAN vol. 2000, no. 06, 22 September 2000 (2000-09-22) & JP 2000 083629 A (NAGASAKI KAIDO BUSSAN KK), 28 March 2000 (2000-03-28)

## Description

### OBJECT OF THE INVENTION

The present invention refers to a process to preserve vegetables, such as vegetables or market garden product and/or vegetable dishes, based on a mixed process that consists in a short duration, high temperature, heat sterilization treatment, rapid and aseptic cooling, packaging and hyperbaric or heat pasteurization.

The product obtained using this process is also an object of the invention, whether this be a vegetable or vegetable dish, made with long-lasting vegetables that maintains the high safety standards of traditional preserves, keeping the vegetable whole, conserving its nutritional properties and the flavours and freshness of the raw and fresh vegetables, which can then be directly marketed or processed to obtain another product.

### BACKGROUND OF THE INVENTION

There are several known processes to preserve vegetables or vegetable dishes, and these products can be classified according to these processes into the following ranges of products:
The 1^{st} product range corresponds to fresh products, which have not undergone any treatment process, and conserve all the properties characteristic of the fresh products.
The 2^{nd} range corresponds to preserves of vegetables and/or vegetable dishes which are subjected to heat treatment at high temperature in an air-tight container to destroy the microbial flora. This heat treatment ensures that the preserve remains unaltered at room temperature and eliminates the risk of botulism poisoning. A disadvantage of this process is that the organoleptic characteristics are negatively affected producing watery flavours because the products are immersed in a liquid which is required to conduct the heat by convection. Moreover, the prolonged heat treatments that usually accompany the process produce overcooked flavours, loss of freshness with the products becoming dark in colour, loss of vitamins and slow cooling.

The preservation of vegetables and/or vegetable dishes by freezing, corresponding to the third product range, is based on a slowing down of microbial growth instead of destroying it, by cooling the products to around -20 ° C after a preliminary heat treatment.

Recently, new ways of preserving vegetables have emerged based mainly on processes associated with extreme hygiene in the preparation process with storage in positive cold (temperatures above 0°C). These new processes are classified as the 4^{th} and 5^{th} product ranges.

The 4^{th} range refers to raw vegetables and/or vegetable dishes which undergo a hygienizing process, after which they are packaged and cooled in a refrigeration chain during their distribution and marketing. In this process the vegetables are not heat treated.

Finally, we have the 5th product range that corresponds to vacuum-packed vegetables and/or vegetable dishes, which, after packaging, are pasteurized, cooled and stored in a positive refrigeration chain. This process gives a better flavour than traditional preserving processes because the vegetables are cooked in their own juices. One drawback of this process is that it may not eliminate the risk of growth of the bacteria clostridium botulinum, so the refrigeration chain must be below 3.5 ° C, a condition that is not usually fulfilled along the whole Spanish refrigeration chain. It also has the same drawbacks concerning loss of organoleptic properties and vitamins as the traditional preserves in the 2nd product range, since the pasteurization times in similar conditions are much longer. This is not recommendable for heat-sensitive vegetables or dishes that contain them. This is the case for most vegetables with only a few exceptions such as red beetroot and corn.

### DESCRIPTION OF THE INVENTION

The object of the invention corresponds to a process to preserve vegetables and/or vegetable dishes that combines the safety benefits of traditional preservation or the 2nd product range with the benefits to flavour of the 5th range and the freshness of the 4th range, and also the product obtained by this process.

In this way, a new process is obtained to preserve vegetables and/or vegetable dishes that can be used to obtain a product that completely satisfies the current requirements of the final customer. These requirements are as follows:
- Fresh or natural products, judged organoleptically by their colour, flavour and surface textures.
- Easy to use. Packaging that is easier to open than traditional cans or jars.
- All the above but also maintaining high food safety standards.

Specifically, the new process can be used to obtain a long-lasting vegetable and/or vegetable dish by a mixed process consisting in the following steps:
- Heat treatment with elimination of pathogens from the product before packaging.
- Rapid aseptic cooling.
- Hygienic packing
- Heat or hyperbaric pasteurization at a pressure that reduces by five or more cycles the environmental microbial load (non pathogenic fermentative bacteria) acquired by treating in the clean room.

The product obtained by this process can be sold directly or can be processed further, for example, can be liquidised to be sold as "gazpacho" (Spanish cold vegetable soup), or by any other process that implies treatment of the vegetables obtained by the process described here.

### DESCRIPTION OF THE DRAWINGS

To complement the description given here and to make the characteristics of the invention easier to understand, according to a preferred practical embodiment of the invention, and forming part of this description, this is accompanied by a set of drawings which, helping to illustrate an embodiment of the invention but in no way limiting application of the invention, represent the following:

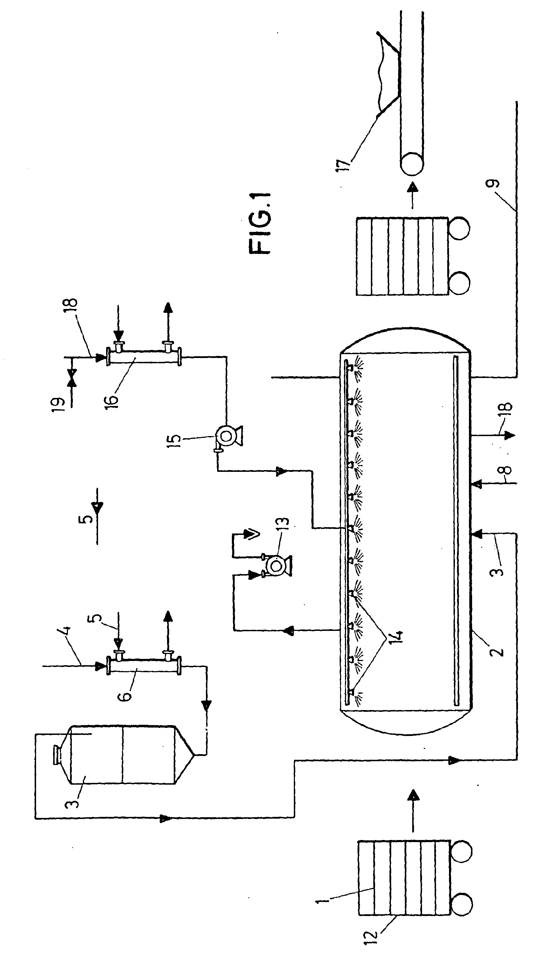

Figure 1.- A sketch of an apparatus to implement the vegetable preservation process that forms the object of the invention.

### PREFERRED EMBODIMENT OF THE INVENTION

From the figure given it can be observed how in the preferred preservation process for vegetables and/or vegetable dishes the prepared vegetables (washed and chopped) are placed in trays (1) which are then introduced inside the cage (12), which is placed inside the adjustable pressure autoclave (2), referred to as such because it consists of a conventional autoclave attached to a vacuum pump and an aseptic circuit into which steam can be introduced, as shown later, which is also called "pressure cooker" to heat treat these vegetable product using clean steam (3) and high pressure. Before heating, the air is eliminated from the adjustable pressure autoclave (2) using a vacuum pump (13) which considerably accelerates the process compared to the traditional method of air entrainment by steam.

By heat treating the products at high temperature before packing them, the time required to reduce sufficiently the microbial load is significantly reduced (at least equivalent to 12 decimal reductions of clostridium), so the original flavours and colours are conserved. The heat is transmitted directly to the product surface as the clean steam (3) changes state from vapour to water; this takes place in a very short time and uses a very small amount of water, since the liquid does not need to cover the product as it does in the traditional preserving process.

The clean steam (3) enters the adjustable pressure autoclave (2) at a very high speed, facilitated by the elimination of air by the vacuum pump (13), taking 2 minutes to reach the required state compared to 5 minutes by conventional processes. This clean steam (3) does not come from a boiler but instead is produced from untreated drinking water (4) which is introduced into at least one exchanger (6) where it is heated by heat transferred by steam (5), which can be produced by a steam boiler but is not mixed with the untreated drinking water (4). In this way, there is no risk that impurities from the boiler or the remains of highly alkaline salts that are often produced in conventional boilers are present in the steam.

The product is then rapidly cooled inside the adjustable pressure autoclave (2) by cold showers (14), which can reach more of the product surface area significantly accelerating the process, which takes place in a closed circuit comprised of the adjustable pressure autoclave (2), an aseptic pump (15) and a water/water exchanger (16). The pump (15) sucks in the water produced by condensation of the clean steam from the previous heating phase, while at the same time it can add sterile water to the process. This reuse of water prevents the loss of sugar from the products resulting in almost unaltered flavours. The circuit must contain steam barriers or some other solution that guarantees that the system remains aseptic. Cooling must be carried out under controlled pressure to prevent rupture of cells, which can cause visible and recognisable reductions in yield and signs of wilting, which corresponds to 20% in traditional preserving processes, to eliminate the defects. This is done by introducing a pressurized gas (8) that is both inert and sterile, preferably corresponding to CO₂, but also allowing the use of other inert sterile gases such as nitrogen. The refrigeration circuit as mentioned previously is in a closed circuit and the water from the condensed steam and the water from the showers is collected by the pipe (18) is cooled in the exchanger (16) and sterile water is supplied by (19) if necessary.

The next step consists in the hygienic packing of the vegetable and/or vegetable dishes (17) after rapidly cooling the product, which is carried out in the clean room (9), in such a way to guarantee that the product is not recontaminated with a flora of over 1000 CFU (Colony Forming Units). This is achieved by opening the adjustable pressure autoclave (2) inside the clean room (9). The products will be vacuum-packed with the optional addition of liquid. The packaging will be flexible and resistant to pasteurization and will incorporate a barrier to oxygen that will determine the true lifetime of the product.

Finally, the packaged product will be pasteurized by heat or high pressure to achieve the following effects:
- To reduce by at least 5 logarithmic cycles the flora potentially added during handling in the clean room, producing a sterile product without carrying out heat treatments that would affect its organoleptic properties.
- Complementary elimination of the enzymatic activity obtained in the heat treatment by eliminating long chain heat-resistant enzymes such as polygacturonase.

## Claims

1. Process to preserve vegetables or vegetable dishes, **characterized in that** it consists in carrying out the following steps on a product corresponding to said vegetables or vegetable dish:
heat treatment of said product for eliminating pathogens wherein said heat treatment is carried out under pressure inside an adjustable pressure autoclave, by applying clean steam on said product,
cooling said product inside said adjustable pressure autoclave,
hygienic packaging of said product after said cooling process
and hyperbaric pasteurization of the packaged product.

2. Process according to claim 1 wherein the cooling treatment is carried out using cold showers (14) of water applied on the product.

3. Process according to claim 2 wherein the water of said cold showers is produced in a closed circuit comprising a pump, a water/water exchanger coupled to said adjustable pressure autoclave so that the water of the heat treatment is reused in the cooling process.

4. Process according to claim 2 wherein said cooling process is carried out under controlled pressure in such a manner to prevent rupture of the cells of said product.

5. Process, according to claims 1 wherein before the step of heat treatment, the air in the adjustable pressure autoclave is extracted by using a vacuum pump.

6. Process according to claim 1, wherein the clean steam of the heat treatment is produced from untreated drinking water (4) that is introduced into at least one exchanger where it is heated by heat transfer from a steam that is produced by a steam boiler.

7. Process, according to claim 1 wherein the cooling treatment is aseptic.

8. Process according to claim 1 wherein the controller pressure in the cooling process is achieved by adding an inert and sterile gas to the adjustable pressure autoclave.

9. Process according to claim 8 wherein the pressurized gas is CO₂.

10. Process, according to claim 8 wherein the pressurized gas is nitrogen.

11. Process according to claim 1 wherein that after the cooling treatment the autoclave is opened in the same place used to carry out the hygienic packing.

12. Process according to claim 11, wherein the product is packaged in a clean room.

13. Process, according to claims 1 and 11 wherein the packaging process is carried out under vacuum.

14. Process, according to claim 10 wherein during the vacuum packaging liquid is added to the product.

## Patentansprüche

1. Verfahren zum Konservieren von Gemüse oder Gemüsegerichten, **dadurch gekennzeichnet, dass** an einem dem Gemüse oder Gemüsegericht entsprechenden Produkt die folgenden Schritte vorgenommen werden:
Wärmebehandlung des Produkts zum Beseitigen von Pathogenen, wobei die Wärmebehandlung unter Druck in einem einstellbaren Druck-Autoklaven durchgeführt wird, indem dem Produkt Reindampf zugeführt wird,
Kühlen des Produkts in dem einstellbaren Druck-Autoklaven,
hygienisches Verpacken des Produkts nach dem Kühlvorgang
und hyperbare Pasteurisierung des verpackten Produkts.

2. Verfahren nach Anspruch 1, bei dem die Kühlbehandlung durchgeführt wird, indem das Produkt kalten Wassergüssen (14) ausgesetzt wird.

3. Verfahren nach Anspruch 2, bei dem das Wasser der kalten Güsse in einem geschlossenen Kreislauf, der eine Pumpe und einen mit dem einstellbaren Druck-Autoklaven verbundenen Wasser/Wassertauscher aufweist, durchgeführt wird, so dass das Wasser der Wärmebehandlung in dem Kühlvorgang wiederverwendet wird.

4. Verfahren nach Anspruch 2, bei dem der Kühlvorgang mit gesteuertem Druck dahingehend durchgeführt wird, dass ein Aufbrechen der Zellen des Produkts verhindert wird.

5. Verfahren nach Anspruch 1, bei dem vor dem Schritt der Wärmebehandlung die Luft in dem einstellbaren Druck-Autoklaven mittels einer Vakuumpumpe extrahiert wird.

6. Verfahren nach Anspruch 1, bei dem der Reindampf der Wärmebehandlung aus unbehandeltem Trinkwasser (4) erzeugt wird, das in mindestens einen Tauscher eingeführt wird, in dem es durch Übertragung von Wärme aus einem mittels eines Dampfboilers erzeugten Dampf erwärmt wird.

7. Verfahren nach Anspruch 1, bei dem die Wärmebehandlung aseptisch ist.

8. Verfahren nach Anspruch 1, bei dem der gesteuerte Druck in dem Kühlvorgang erzielt wird, indem dem einstellbaren Druck-Autoklaven ein inertes und steriles Gas zugeführt wird.

9. Verfahren nach Anspruch 8, bei dem das Druckgas CO₂ ist.

10. Verfahren nach Anspruch 8, bei dem das Druckgas Stickstoff ist.

11. Verfahren nach Anspruch 1, bei dem nach der Kühlbehandlung der Autoklav an dem gleichen Ort geöffnet wird, der zum Durchführen des hygienischen Verpackens verwendet wird.

12. Verfahren nach Anspruch 11, bei dem das Produkt in einem sauberen Raum verpackt wird.

13. Verfahren nach Anspruch 1 und 11, bei dem der Verpackungsvorgang unter Vakuumbedingungen durchgeführt wird.

14. Verfahren nach Anspruch 10, bei dem während des Vakuumverpackens dem Produkt Flüssigkeit hinzugefügt wird.

## Revendications

1. Procédé de conservation des légumes ou plats à base de légumes, **caractérisé en ce qu'**il consiste à exécuter les étapes suivantes sur un produit correspondant auxdits légumes ou audit plat à base de légumes:
traitement à la chaleur dudit produit pour éliminer des agents pathogènes, ledit traitement à la chaleur étant exécuté sous pression à l'intérieur d'un autoclave à pression réglable, par application de vapeur propre sur ledit produit,
refroidissement dudit produit à l'intérieur dudit autoclave à pression réglable,
emballage hygiénique dudit produit après ledit traitement de refroidissement, et
pasteurisation hyperbare du produit emballé.

2. Procédé selon la revendication 1, dans lequel le traitement de refroidissement est exécuté à l'aide de douches froides (14) d'eau appliquée sur le produit.

3. Procédé selon la revendication 2, dans lequel l'eau desdites douches froides est produite dans un circuit fermé comprenant une pompe, un échangeur eau/eau couplé audit autoclave à pression réglable de sorte que l'eau du traitement à la chaleur est réutilisée dans le procédé de refroidissement.

4. Procédé selon la revendication 2, dans lequel ledit procédé de refroidissement est exécuté sous pression régulée de sorte à empêcher une rupture des cellules dudit produit.

5. Procédé selon la revendication 1, dans lequel, avant l'étape de traitement à la chaleur, l'air dans l'autoclave à pression réglable est extrait à l'aide d'une pompe à vide.

6. Procédé selon la revendication 1, dans lequel la vapeur propre du traitement à la chaleur est produite à partir d'eau potable non traitée (4) qui est introduite dans au moins un échangeur où elle est chauffée par transfert de chaleur à partir d'une vapeur qui est produite par une chaudière à vapeur.

7. Procédé selon la revendication 1, dans lequel le traitement de refroidissement est aseptique.

8. Procédé selon la revendication 1, dans lequel la pression régulée dans le procédé de refroidissement est obtenue par addition d'un gaz inerte et stérile à l'autoclave à pression réglable.

9. Procédé selon la revendication 8, dans lequel le gaz sous pression est le CO₂.

10. Procédé selon la revendication 8, dans lequel le gaz sous pression est l'azote.

11. Procédé selon la revendication 1, dans lequel, après le traitement de refroidissement, l'autoclave est ouvert au même endroit que celui utilisé pour exécuter l'emballage hygiénique.

12. Procédé selon la revendication 11, dans lequel le produit est emballé dans une salle blanche.

13. Procédé selon les revendications 1 et 11, dans lequel le procédé d'emballage est exécuté sous vide.

14. Procédé selon la revendication 10, dans lequel pendant l'emballage sous vide, du liquide est ajouté au produit.
